# EUROPEAN PATENT APPLICATION

(11) **EP 4 715 809 A1**
(43) Date of publication of application: **25.03.2026**
(21) Application number: 25195427.7
(22) Date of filing: 12.08.2025
(51) Int. Cl.: G10L 15/22, G06F 3/16, G10L 15/08

(54) **AUDIO MANAGEMENT METHOD, COMPUTING DEVICE, AUDIO SYSTEM, AND MEDIUM**

(30) Priority: 20.09.2024 CN 202411323062
(71) Applicant: Harman International Industries, Incorporated, Stamford, CT 06901 (US)
(72) Inventor: TANG, Chuanlong, 518057 Shenzhen (CN); WAN, Yulin, 518057 Shenzhen (CN); XUE, Baihui, 518057 Shenzhen (CN); DOU, Yudong, 518057 Shenzhen (CN); SUO, Suma, 518057 Shenzhen (CN); YE, Wei, 518057 Shenzhen (CN)
(74) Representative: Rummler, Felix

(57) **Abstract**

An audio management method, a computing device, an audio system, and a medium are provided. The audio management method is performed by a computing device, and may include: sending, via communicative connection with one or more audio devices in an environment, an activation instruction to the one or more audio devices to activate a microphone included at the one or more audio devices to capture audio data; receiving, via the communicative connection, the captured audio data from the one or more audio devices, and performing speech recognition on the received audio data; and generating prompt control information in response to a target sound being recognized from the audio data based on the speech recognition.

## Description

### Technical Field

The present application relates to the field of audio management, and more particularly, to a computing device for audio management, an audio system, an audio management method, and a computer-readable storage medium.

### Background

Today, with the rapid development of digital technology, smart devices play an increasingly important role in our daily lives. This is particularly true for audio devices, where audio devices (e.g., loudspeakers) have transcended their traditional role as playback media to assume interactive and control functions through integrated components (e.g., microphones).

For example, microphones of current audio devices are mainly used in two aspects: in one aspect, for enhancing audio calibration to improve audio output quality; and in the other aspect, when an audio device functions as a smart audio device, the microphone can capture surrounding signals, and the audio device performs speech recognition on the captured signal to recognize corresponding instructions (e.g., a wake-up instruction and a control instruction, etc.), and operates according to the instructions.

It can be seen that current applications of microphones at audio devices have certain limitations, resulting in certain resource waste. In addition, when an audio device performs speech recognition on signals captured by a microphone, it is necessary to provide a processing apparatus with sufficient processing capability at the audio device, thus leading to high design costs for the audio device.

### Summary of the Invention

According to an aspect of the present application, an audio management method is provided, which is performed by a computing device, including: sending, via communicative connection with one or more audio devices in an environment, an activation instruction to the one or more audio devices to activate a microphone included at the one or more audio devices to capture audio data; receiving, via the communicative connection, the captured audio data from the one or more audio devices, and performing speech recognition on the received audio data; and generating prompt control information in response to a target sound being recognized from the audio data based on the speech recognition.

According to another aspect of the present application, a computing device is provided, including: at least one communication component configured to perform communicative connection with one or more audio devices in an environment, at least one processor, and at least one memory configured to store computer programs or instructions that, when executed by the at least one processor, cause the at least one processor to perform the method as described above.

According to another aspect of the present application, an audio system is provided, including: a first computing device configured to perform communicative connection with a first group of audio devices in an environment, and a second computing device configured to perform communicative connection with a second group of audio devices in the environment, where the first group of audio devices and the second group of audio devices are different or at least partially the same, where each of the first computing device and the second computing device includes: at least one communication component configured to perform communicative connection with a corresponding group of audio devices, at least one processor, and at least one memory configured to store computer programs or instructions that, when executed by the at least one processor, cause the at least one processor to: send, via the communicative connection, an activation instruction to a corresponding group of audio devices in the first group of audio devices and the second group of audio devices to activate microphones equipped at the corresponding group of audio devices to capture audio data; receive, via the communicative connection, the captured audio data from the corresponding group of audio devices, and perform speech recognition on the received audio data; and generate prompt control information in response to a target sound being recognized from the audio data based on the speech recognition.

According to still another aspect of the present application, a computer-readable storage medium is provided, which has stored thereon computer programs or instructions that, when executed by a processor, cause the processor to perform the audio management method as described above.

According to still another aspect of the present application, a computer program product is provided, which includes thereon computer programs or instructions that, when executed by a processor, cause the processor to perform the audio management method as described above.

According to embodiments of the present application, by utilizing a communication network between a computing device and audio devices (e.g., loudspeakers), real-time data transmission between the audio devices and the computing device can be implemented, such that deeper-level integration and communication between the audio devices and the computing device can be achieved utilizing respective hardware conditions possessed by the computing device and individual audio devices, so as to improve the utilization rate of the existing hardware resources. Furthermore, when the computing device recognizes a target sound (e.g., a child calling for Dad or Mom or crying, a smoke alarm sound, etc.) based on performing speech recognition on audio data received in real time from a loudspeaker, an alert is promptly issued to a user, such that the user can timely and rapidly respond and take appropriate measures to resolve possible emergency situations or problems in the environment. Since complex processing such as speech recognition is configured at the computing device having stronger processing capability, there is no high requirement for processing capability of the loudspeaker, enabling reasonable utilization of ordinary speakers including microphones. Furthermore, bidirectional audio data transmission between the computing device and the audio devices can also be implemented.

### Brief Description of the Drawings

FIG. 1 illustrates a schematic diagram of a scenario in which an intelligent audio system is applied to a home monitoring scenario.
FIG. 2 illustrates an exemplary structural block diagram of a computing device according to embodiments of the present application.
FIG. 3A illustrates a schematic diagram of a data flow transferred between a computing device and a loudspeaker according to embodiments of the present application;
FIG. 3B illustrates a schematic diagram of data interaction between various functional modules in the computing device and various functional modules in the loudspeaker according to embodiments of the present application.
FIGS. 4A and 4B illustrate schematic diagrams of an audio system according to embodiments of the present application.
FIG. 5 illustrates a schematic flowchart of an audio management method according to embodiments of the present application.

### Detailed Description

Regarding the accompanying drawings, several illustrative embodiments are described, which form part of the specification. Although specific embodiments that may implement one or more aspects of the present disclosure are described below, other embodiments may be used and various modifications may be made without departing from the scope of the present disclosure or the spirit of the appended claims.

As described previously, the development of audio devices (e.g., loudspeakers) used in conjunction with microphones has certain deficiencies, for example, the following drawbacks related to optimization and resource utilization.
1. Pursuit of audio quality: Many high-end audio devices are primarily used for enhancing audio calibration and playback quality, aiming to provide an exceptional music experience. These audio devices are equipped with microphones, but these microphones are typically used for enhancing audio calibration to improve audio output quality.
2. Potential resource waste: Although these audio devices have sound capture capabilities and also have functions such as audio processing, they cannot be well combined with speech recognition aspects to be suitable for more scenarios without additionally adding speech recognition processing capability at the audio devices, resulting in potential hardware resource waste.
3. Lack of interactivity: Typically, communication between audio devices and applications of smartphones mainly involves utilizing the audio devices to play audio data from the applications. Few audio devices are designed for deeper-level integration and communication with applications of smartphones. This limits users' ability to control and interact in a smarter and more personalized manner, which constrains the user experience.
4. Insufficient customization: Due to limited communication between audio devices and smartphone applications, users' ability to customize functions and preferences of the audio devices is also limited. In this case, users cannot fully utilize powerful processing capabilities and flexible software ecosystems of smartphones to extend or optimize the functionalities of audio devices.

That is to say, although current audio devices have made significant progress in enhancing audio quality, current audio devices are still insufficient in fully exploiting the potential of integrated microphones, interacting and communicating with smartphones, and meeting users' customization needs.

Embodiments of the present application provide an intelligent audio system, also referred to as an intelligent loudspeaker system, which can utilize a local area network between a computing device and audio devices (e.g., loudspeakers) to implement real-time data transmission and voice communication between the audio devices and the computing device, such that deeper-level integration and communication between the audio devices and the computing device and between the audio devices can be achieved and bidirectional data transmission can be implemented utilizing respective hardware conditions possessed by the computing device and individual audio devices, so as to improve the utilization rate of the existing hardware resources and the interactive capabilities with users and provide services that are more personalized, and application to more application scenarios can be achieved, such as a home monitoring scenario.

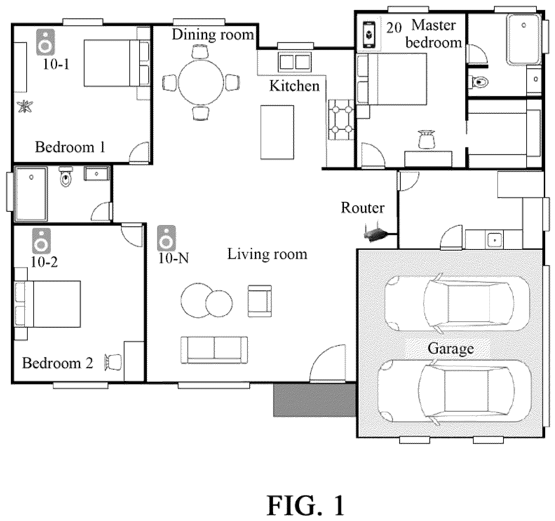

FIG. 1 illustrates a schematic diagram of a scenario in which an intelligent audio system is applied to a home monitoring scenario.

As shown in FIG. 1, a plurality of loudspeakers (10-1, 10-2, ..., 10-N, collectively referred to as 10) are arranged at various locations in rooms, where each loudspeaker 10 can play various kinds of audio data (e.g., music) and also includes a microphone (e.g., a built-in microphone, not shown) to capture audio data of an ambient environment of the loudspeaker (e.g., bedroom 1 and bedroom 2). A computing device 20 may be associated with a user. For example, the computing device 20 may be a mobile computing device such as a laptop computer, a smartphone, a tablet PC, etc., a consumer electronic device (e.g., a smart loudspeaker, a TV, earphones, a wearable device, etc.) or other electronic devices (e.g., a vehicle-mounted device). Each loudspeaker 10 and the computing device 20 may perform network communication, for example, wired connection or wireless connection. **In** some embodiments, the plurality of loudspeakers 10 and the computing device 20 may be wirelessly connected via a local area network of the home, for example, through short-range communication technologies such as Wi-Fi or Bluetooth, etc. It should be noted that, although only one computing device 20 is shown in FIG. 1, it should be understood that the number of computing devices 20 may be a plurality, and each of the computing devices 20 may be in communicative connection with one or more loudspeakers 10.

Via the network connection between the loudspeakers 10 and the computing device 20, the computing device 20 may acquire audio data captured by microphones of the loudspeakers 10 from the loudspeakers 10, and perform speech recognition on the audio data. That is to say, in this scenario, the loudspeakers 10 may not have a speech recognition function, but instead, by sending the audio data to the computing device 20, powerful processing functions at the computing device 20 are utilized to implement the operation of speech recognition, such that configuration of the loudspeakers 10 need not be particularly high, thereby reducing costs or improving universality. The computing device 20 may communicate with a portion of the plurality of loudspeakers 10, without needing to communicate with all loudspeakers 10.

As a specific example, a loudspeaker 10 located in a child's bedroom, after being activated, can capture audio data in the bedroom environment, and after processing the audio data, send it to the computing device 20. The computing device 20 may perform speech recognition on the received audio data, and if a target sound such as "Dad", "Mom" or crying is recognized, the computing device 20 can immediately warn an associated user, indicating that there may be a situation requiring attention in the bedroom. This feature is particularly useful for monitoring safety of a child. For example, if a child is afraid or needs help in different areas at home and calls out "Mom" or "Dad", the computing device immediately notifies an associated Mom and/or Dad, especially during rest at night. Furthermore, the computing device 20 may also recognize which loudspeaker 10 the audio data comes from, thereby determining a specific bedroom. This setting greatly enhances the practicality and the flexibility of home security monitoring, thereby allowing necessary actions to be taken in a timely manner. The combination of the loudspeakers and the computing device effectively enhances home security, and as will be described later, can also perform bidirectional audio data transmission.

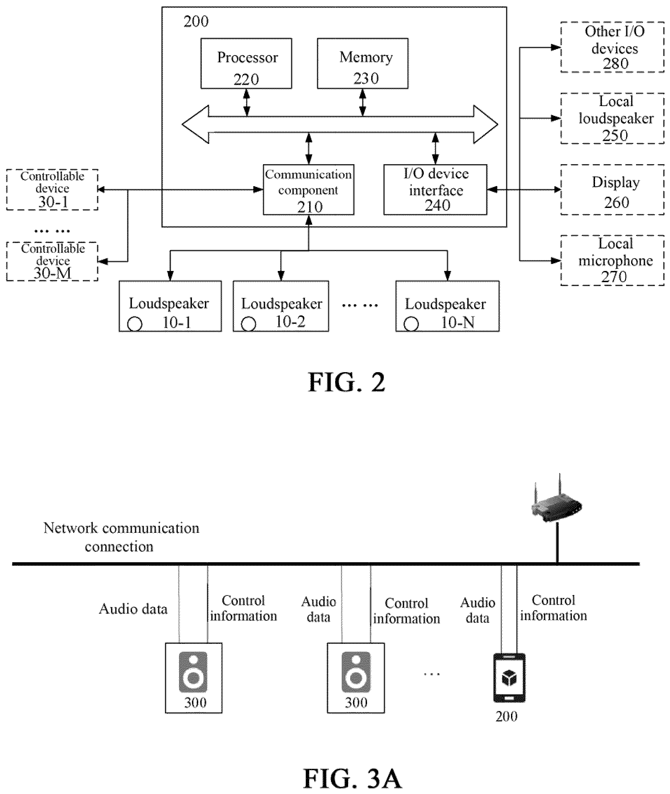

More details of the intelligent audio system in embodiments of the present application will be introduced below in conjunction with FIGS. 2 to 5.

FIG. 2 illustrates an exemplary structural block diagram of a computing device according to embodiments of the present application.

As shown in FIG. 2, a computing device 200 may include at least one communication component 210, at least one processor 220, and at least one memory 230.

The at least one communication component 210 of the computing device 200 may be configured to perform communicative connection between the computing device 200 and one or more audio devices (e.g., loudspeakers) in an environment. Hereinafter, the descriptor is provided taking audio devices being loudspeakers as an example.

For example, the environment may be an indoor space (e.g., a house, a gym, a shop, a train station, etc.), an outdoor space, or in a means of transportation. The computing device 200 is associated with a user. A plurality of loudspeakers with microphones (e.g., a plurality of loudspeakers (10-1, 10-2, ..., and 10-N, collectively referred to as loudspeakers 10) as shown in FIG. 1) may be arranged in different areas in the environment. For example, loudspeakers with microphones may be arranged in each of a plurality of bedrooms in a house. Since each of these loudspeakers may be configured with a microphone, capture of audio data of an ambient environment may be implemented. Furthermore, each loudspeaker similarly also includes a communication component, such that the loudspeaker can perform communicative connection with the computing device. The loudspeaker 10 and the computing device 200 may perform network communication, for example, via wired connection or wireless connection. In some embodiments, the plurality of loudspeakers and the computing device 200 may be wirelessly connected via a local area network of a home, for example, through short-range communication technologies such as Wi-Fi or Bluetooth, etc. Each communication component may include various wireless communication modules composed of chips and peripheral hardware circuits.

The at least one memory 230 may be configured to store computer programs or instructions that, when executed by the at least one processor 220, can cause the at least one processor 220 to perform various operations. For example, the processor 220 may start and run an installed application program stored on the memory 230, so as to perform various operations. The various operations performed by the processor may include: sending, via communicative connection between the computing device 200 and one or more loudspeakers selected from all arranged loudspeakers, an activation instruction to these selected loudspeakers to activate microphones included in the selected loudspeakers to capture audio data; receiving, via the communicative connection, the captured audio data from the selected loudspeakers, and performing speech recognition on the received audio data; and generating prompt control information in response to a target sound being recognized from the received audio data based on the speech recognition.

Optionally, the computing device 200 may simultaneously receive the captured audio data from two or more loudspeakers in real time; therefore, the processor 220 of the computing device 200 can perform speech recognition on these audio data in parallel or alternately.

Optionally, in some embodiments, the target sound is a linguistic sound including a keyword, such that, when the computing device 200 performs speech recognition on the received audio data, the at least one processor 220 of the computing device 200 can perform speech recognition on the received audio data to recognize whether the audio data includes a keyword included in the target sound, and in a case where the received audio data includes the keyword, determine that the audio data includes the target sound.

For example, the keyword may be preset and stored at the memory of the computing device 200, or the computing device 200 may acquire it from a remote server. In some other examples, the keyword may be customized by the user. For example, in response to execution of an application program, the user may input the customized keyword via an input device associated with the computing device 200 (e.g., a keyboard, a mouse, or a touch display screen integrated with the display, etc.). For example, the computing device may include an input/output (I/O) device interface 240, thereby enabling connection to various input devices or output devices. For example, a local loudspeaker 250 can serve as an output device, a local microphone 270 can serve as an input device, and a display 260 can serve as an output device for content display or constitute an input/output device in combination with touch screen technology. Certainly, the I/O device interface of the computing device 200 may also include other I/O devices 280, which is not limited in the present application. A user interface may be presented on the display associated with the computing device 200 for the user to set keywords for speech recognition. The computing device 200, by running a computer program (e.g., a mobile application), can provide various display elements on a user interface presented on the display for the user to interact with the computing device, and can perform interface switching to provide more contents.

Optionally, in some other embodiments, the target sound may be a non-linguistic sound (e.g., a sound of breaking glass, a smoke alarm sound, or a child's crying sound, etc.), and a target sound database or one or more sound models may be stored in the memory 230 of the computing device 200; therefore, in order to perform speech recognition on the received audio data, the at least one processor 220 of the computing device 200 can also perform speech recognition on the received audio data to recognize whether the received audio data matches a candidate target sound in the target sound database or matches a candidate sound model in the stored one or more candidate sound models. Each entry in the target sound database and each sound model may be classified according to target sound categories, and may be generated using machine learning techniques or predictive modeling techniques (e.g.: Hidden Markov Models, neural networks, Support Vector Machines (SVM), decision tree learning, etc.).

Additionally, in the process of recognizing the target sound based on speech recognition, it is possible to recognize which person the target sound comes from based on, for example, voiceprint recognition. Alternatively, the received audio data may be received together with identification information of a loudspeaker or indication information of a location where the loudspeaker is located, thereby enabling determination of specifically which speaker the target sound comes from. Optionally, when generating the prompt control information, prompt information indicating a specific source of the target sound may also be generated. For example, the prompt information may be displayed on the display of the computing device or played via voice at the local loudspeaker of the computing device.

Optionally, transmission of audio data between the loudspeaker and the computing device (e.g., audio data captured by the microphone, voice data from the computing device to the loudspeaker to be described later, or other potential audio data) may use various suitable transmission protocols (e.g., Real-time Transport Protocol (RTP)) to ensure the timeliness and the quality of the audio data. **In the** context of the present application, a sound output by the user that is captured by the local microphone of the computing device is typically expressed as voice data, but the voice data is also a type of audio data, thus voice data and audio data may also be used interchangeably.

Optionally, as described previously, a portion may be selected from the plurality of already arranged loudspeakers to perform communicative connection with the computing device. In this case, the at least one processor 210 of the computing device 200 may also: determine a plurality of loudspeakers based on device discovery, and display display elements regarding the determined plurality of loudspeakers on a display associated with the computing device; and control, in response to a selection for the display elements regarding the one or more loudspeakers, the at least one communication component 210 of the computing device 200 to perform communicative connection with the selected one or more loudspeakers, such that the activation instruction is sent from the computing device 200 to the selected one or more loudspeakers to activate microphones of the one or more loudspeakers to perform continuous sound capture.

For example, regarding the process of device discovery, device discovery and automatic connection within the local area network may be implemented based on technologies such as Multicast DNS (mDNS) or Simple Service Discovery Protocol (SSDP), and transmission of various kinds of control information may be facilitated through TCP/IP-based protocols (such as HTTP/HTTPS API calls). For example, when an application program at the computing device is run and an activation instruction is sent to the selected one or more loudspeakers, communication components of both the computing device and the one or more loudspeakers are initialized. The one or more loudspeakers may use mDNS or SSDP to broadcast their service information. Meanwhile, the computing device uses its communication component to listen for these broadcast messages within the local area network to find available loudspeakers, then retrieves service information of the available loudspeakers, such as device type and service port, to decide loudspeakers with which connection can be established, and may use the collected corresponding service information to establish communicative connection with the selected loudspeakers to start exchange of audio data and control information. Alternatively, information about loudspeakers with which connection can be established may also be notified to the user, for example, displayed on the user interface on the display, and in response to the user's selection input for one or more loudspeakers, establish communicative connection therewith using corresponding service information.

Additionally, when generating prompt control information, the one or more processors 220 may generate control information for controlling the local loudspeaker included in the computing device to emit an alarm sound; generate control information for controlling the local loudspeaker included in the computing device to play the acquired audio data in real time; and/or generate display control information for controlling the display included in the computing device to display a display element related to a textual prompt.

For example, when the target sound is recognized, the local loudspeaker of the computing device 200 may emit an alarm sound based on the control information, such that the user associated with the computing device 200 can be notified; or, the local loudspeaker may play the acquired audio data including the target sound based on the control information, such that the user can be notified of specific content of the audio data in real time; or, the display included in the computing device may display related information of a textual prompt on the display based on the display control information, such that the user can see the prompt information from the display. Additionally, the prompt control information may also be used to control one or more actuators to cause a vibration element of the computing device to vibrate, etc. The present application does not limit specific prompt methods.

In this way, by utilizing a communication network between a computing device and audio devices (e.g., loudspeakers), real-time data transmission between the audio devices and the computing device can be implemented, such that deeper-level integration and communication between the audio devices and the computing device can be achieved utilizing respective hardware conditions possessed by the computing device and individual audio devices, so as to improve the utilization rate of the existing hardware resources. Furthermore, when the computing device recognizes a target sound (e.g., a child calling for Dad or Mom or crying, a smoke alarm sound, etc.) based on performing speech recognition on audio data received in real time from a loudspeaker, an alert is promptly issued to a user, such that the user can timely and rapidly respond and take appropriate measures to resolve possible emergency situations or problems in the environment. Since complex processing such as speech recognition is configured at the computing device having stronger processing capability, there is no high requirement for processing capability of the loudspeaker, enabling reasonable utilization of ordinary speakers including microphones.

Furthermore, in some other cases, the at least one communication component 210 of the computing device 200 may also establish second communicative connection with controllable devices (30-1, ..., 30-M, collectively referred to as 30), such that the computing device 200 can also interact with these controllable devices 30. For example, the computing device 200 may send the control information to controllable devices via the second communicative connection, such that the controllable devices 30 may operate according to the control information. Additionally, the controllable devices may also return information or data, etc., to the computing device via the second communicative connection.

Therefore, according to some embodiments of the present application, the at least one processor 220 of the computing device 200 may also send, in response to the target sound being recognized based on the speech recognition, control information to the controllable device via the second wireless connection to cause the controllable device to perform a predetermined operation.

For example, the controllable device 30 may include a video acquisition device (e.g., a camera) in the environment, and the at least one processor 220 of the computing device 200 may, when the target sound is recognized, send the control information to the video acquisition device via the second wireless connection, causing the video acquisition device to perform video acquisition on the environment, such that the at least one processor 220 can receive, in response to sending the control information to the video acquisition device, acquired video data from the video acquisition device via the second communicative connection, and can then control display of the video data on the display associated with the computing device 200. Optionally, the video acquisition device may, in response to the control information, start to perform video acquisition, and transfer video data to the computing device 200 in real time; or, the video acquisition device continuously performs video acquisition, and a local cache or storage apparatus thereof may store video data for a previous predetermined time period relative to a current time period, and in response to the control information, transfer the video data within the predetermined time period to the computing device 200. The video transmission process may also be based on video transmission protocols commonly used in this field.

Alternatively, for another example, the controllable device 30 may be, for example, a corridor light on a corridor from a parents' bedroom to a child's bedroom. The at least one processor 220 of the computing device 200 may, upon recognizing a target sound, send control information to the corridor light via the second wireless connection to cause the corridor light to emit light, thereby facilitating parents going to the child's bedroom to check.

Therefore, through the communicative connection between the loudspeakers and the computing device and the second communicative connection between the computing device and the controllable devices, the computing device can serve as an intermediary, enabling the controllable device to perform a corresponding operation in response to the target sound in the environment. This integrates the concept of smart home, making it possible to more conveniently, timely, and rapidly respond and take appropriate measures to resolve possible emergency situations or problems in the environment.

Additionally, the computing device 200 may additionally or alternatively recognize a user control command in the received audio data through speech recognition, and may send, based on the user control command, control information to a first loudspeaker that captured the audio data or to a second loudspeaker associated with the user control command.

That is to say, a microphone in a loudspeaker may capture speech emitted by a user and send corresponding audio data to the computing device 200. The computing device 200 then performs speech recognition to recognize a user control command in the voice data (e.g., specific commands such as "lower volume", "pause music" or "turn off in one hour"), for example, by converting the voice data into text or commands through speech recognition, then parsing the text or command to determine the user's intent. Then, the computing device 200 may generate corresponding control information to send back to the loudspeaker. Upon receiving the control information, the loudspeaker may perform operations such as adjusting volume, pausing or resuming playback, or setting a timer to turn off, and so on.

Alternatively, since the computing device 200 can manage each loudspeaker, different loudspeakers can achieve mutual control via the computing device. For example, when the user utilizes the microphone of the first loudspeaker 10-1 to issue voice data including a user control command such as turning off music on the second loudspeaker 10-2 to the first loudspeaker 10-1, the voice data may be sent to the computing device 200, and after the computing device 200 processes and recognizes the command through speech recognition, it may send control information for turning off music to the second loudspeaker 10-2 (e.g., by broadcasting control information including an identifier of the second loudspeaker). Once the second loudspeaker 10-2 receives the control information, it performs the operation of turning off music.

In some embodiments of the present application, since the computing device 200 may further include a local microphone, the computing device 200 may also use the local microphone to capture audio data of the ambient environment. For example, it may capture voice data issued by the user associated with the computing device 200 to the local microphone (e.g., by activating voice input based on selection of a display element for local sound capture and/or transfer on the user interface). Consequently, the computing device 200 may also transfer the voice data via the communicative connection in real time to at least a portion of the connected one or more loudspeakers, thereby enabling voice data of the user captured by the local microphone of the computing device 200 to be played through at least a portion of the one or more loudspeakers. Alternatively, the computing device 200 may also transfer preset audio data (e.g., music) to at least a portion of the one or more loudspeakers via the communicative connection. The computing device 200 sending preset audio data or voice data to at least a portion of the loudspeakers may be sending them in response to the target sound being recognized from audio data from the loudspeakers, or sending them spontaneously as required.

For example, when a user associated with the computing device 200 (e.g., a parent) needs to notify all family members in other rooms at home, the user associated with the computing device 200 may issue voice data including a notification to the local microphone of the computing device 200 as required. The computing device 200 may then send the voice data via the communicative connection to loudspeakers in other rooms that are connected, thereby achieving one-to-many broadcast notification. Additionally, the computing device 200 may transfer the preset audio data or voice data captured by the local microphone only to a portion of the connected one or more loudspeakers. For example, the user associated with the computing device 200 may select a loudspeaker to which the voice data captured by the local microphone is to be sent, for example, through selection on a user interface displayed on the display of the computing device 200.

For another example, as described previously, the computing device 200 may determine that the target sound is recognized from the audio data received from the first loudspeaker. Therefore, the computing device may automatically determine to transfer the preset audio data or the voice data captured by the local microphone only to the first loudspeaker. For example, as described previously, the audio data may be transferred to the computing device together with identification information of the loudspeaker or indication information for a location where the loudspeaker is located, and so on. As an example, when a first loudspeaker in a child's bedroom captures a child's crying sound, and audio data including the crying sound is received by the computing device 200 and recognized as crying sound which is the target sound, the user associated with the computing device 200 may issue soothing voice data to the local microphone of the computing device 200, and even if a second loudspeaker in another bedroom is also establishing a connection with the computing device and the computing device 200 is also acquiring audio data captured by a microphone of the second loudspeaker in real time, since the computing device 200 has not recognized the target sound from audio data from the microphone of the second loudspeaker, the computing device 200 may transfer the soothing voice data only to the first loudspeaker in the child's bedroom, but not to the second loudspeaker in the other bedroom.

Therefore, in this manner, one-to-one or one-to-many transmission of voice data from the computing device to loudspeakers can be implemented, which together with receiving audio data from loudspeakers by the computing device as described previously, constitutes a bidirectional audio data flow path between the computing device and the loudspeakers, which significantly enhances interactivity and practicality between the loudspeakers and the computing device, and enriches user experience through effective data exchange and intelligent processing, thereby ensuring timely transmission and management of information. Furthermore, various already described functions at the computing device (e.g., controlling controllable devices, recognizing user control commands, or the like) or potential other functions may be customized by users based on preferences and actual application scenarios, and so on, and can be accomplished merely by modifying computer programs to utilize existing hardware resources, thereby enabling the extension or optimization of functions of audio devices and the computing device.

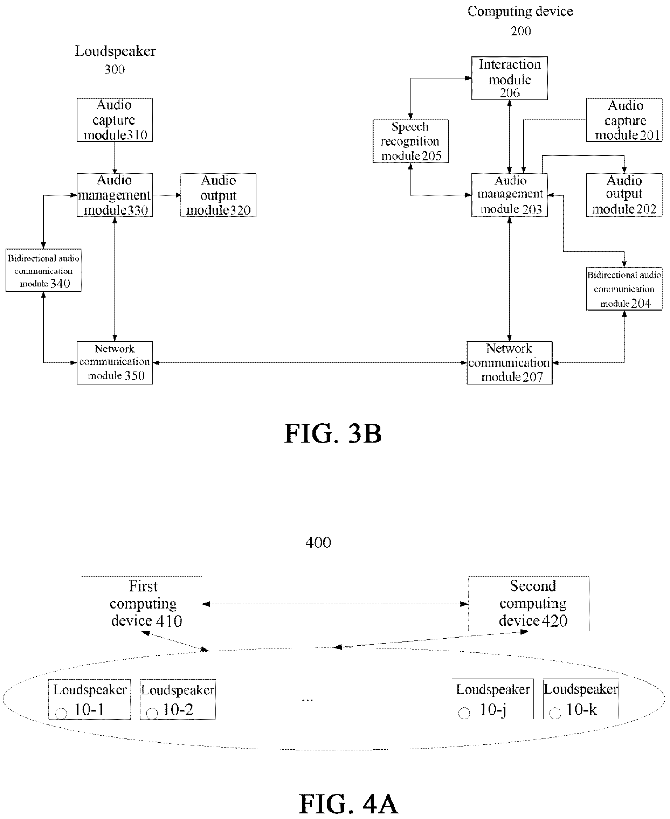

To better understand various operations of the computing device, information flow transferred between the computing device 200 and a loudspeaker 300 will be described below in conjunction with FIG. 3A, and data interaction between various functional modules in the computing device 200 and various functional modules in the loudspeaker 300 will be described in conjunction with FIG. 3B. The loudspeaker 300 may be, for example, the loudspeaker 10 as shown in FIG. 1.

As shown in FIG. 3A, interaction between the computing device 200 and the loudspeaker 300 mainly involves two main types of data: audio data and control data. Audio data relates to sounds captured by both the loudspeaker 300 and the microphone of the computing device as well as other potential audio data. For example, the Real-time Transport Protocol (RTP) may be utilized to ensure the timeliness and the quality of the audio data, but the present application does not limit a transmission protocol for audio data that is to be used.

The control information may include device discovery and establishment of connection, as well as control signaling for managing functions such as activating a microphone of the loudspeaker and implementing voice calls, and so on. The transmission of the control information may be facilitated through TCP/IP-based protocols (such as HTTP/HTTPS API calls), but the present application does not limit a transmission protocol for control information that is to be used.

As shown in FIG. 3B, the loudspeaker 300 may include an audio capture module 310, an audio output module 320, an audio management module 330, a bidirectional audio communication module 340, and a network communication module 350.

The audio capture module 310 may be configured to capture audio data collected by a microphone included in the loudspeaker 300, the microphone being configured for continuously monitoring ambient sounds, including audio data such as speech, noise, and other background noise, etc.

The audio output module 320 may be configured to play processed audio data, for example, voice data from the computing device 200 in a bidirectional call or preset audio data.

The audio management module 330 may be configured to perform initial processing, for example, noise reduction and echo cancellation, on captured sounds to ensure the audio data is clear and suitable for further recognition processing. Additionally, the audio management module 330 may further process audio or voice data transmitted from other modules or devices (e.g., from the computing device) for local playback. Furthermore, the audio management module 330 may also receive control information from the network communication module of the computing device via the network communication module 350, such that control of the loudspeaker by the computing device can be implemented, for example, activating the microphone of the loudspeaker to capture audio data, or stopping music playback based on the control information, etc.

The bidirectional audio communication module 340 may be configured to manage bidirectional audio data flow from the loudspeaker 300 to the computing device 200, for example, audio data from the loudspeaker to the computing device and voice data from the computing device to the loudspeaker. The module 340 may include various protocol processing logic to allow real-time data communication with each other.

The network communication module 350 may be configured to establish communicative connection between the loudspeakers 300 and the computing device 200 to support data transmission between the loudspeakers and the computing device, including bidirectional audio data flow.

These modules in the loudspeaker 300 may be further divided into more sub-modules, or two modules may be merged into one module, and modules related to other functions may also be included, which is not limited in the present application. Each module may be implemented by hardware circuits, computer programs or instructions running on one or more processors, or a combination thereof. For example, the audio output module 320 may be a sound system and its power amplifier circuit, or the like, and the network communication module may be various wireless communication modules composed of chips and peripheral hardware circuits. Furthermore, the audio capture module 310, the audio management module 330, and the bidirectional audio communication module 340 may be implemented by software executed on a processor. Certainly, the present application is not limited thereto, as long as the construction of each module can implement corresponding functions.

Correspondingly, the computing device 200 may include an audio capture module 201, an audio output module 202, an audio management module 203, a bidirectional audio communication module 204, a speech recognition module 205, an interaction module 206, and a network communication module 207.

The network communication module 207 may be configured to establish communicative connection between the loudspeakers 300 and the computing device 200 to securely receive preliminarily processed audio data from the loudspeakers 300, and additionally, similarly also processes and send data transmission from the computing device to the loudspeakers, that is, supporting data transmission between the loudspeakers and the computing device, including bidirectional audio data flow.

The audio capture module 201 may be configured to capture voice data captured by a local microphone of the computing device to implement voice calls, etc., in the bidirectional audio data flow.

The audio output module 202 may play audio or voice data preliminarily processed by the audio management module 203 of the computing device 200, for example, including audio data from the loudspeaker 300 in a bidirectional call or alarm audio prompt information, or the like. Optionally, the audio management module 203 may also acquire status information from the loudspeaker (e.g., current battery level, etc.) via the network communication module 207.

The bidirectional audio communication module 204 may be configured to manage bidirectional audio data flow from the computing device 200 to the loudspeaker 300, for example, audio data from the loudspeaker to the computing device and voice data from the computing device to the loudspeaker. The module 204 may include various protocol processing logic to allow real-time data communication with each other.

The speech recognition module 205 may analyze and recognize a target sound and/or a user control instruction, and so on, in the audio data based on user-customized recognition rules, and issue prompt information to the interaction module 206 or send information of the user control instruction to the audio management module 203, causing the audio management module 203 to generate control information to send it via the network communication module to the audio management module 330 of the loudspeaker 300 or other loudspeakers, thereby controlling corresponding operations of the loudspeaker 300 or other loudspeakers.

The interaction module 206 may include a user interface (UI) module and a notification module, where the UI module may be configured to provide an intuitive interface on a display, allowing a user to easily define and adjust loudspeakers they are interested in, target sounds, loudspeakers to which to transmit voice data, etc. The notification module may, based on a speech recognition result, send visual or auditory prompt information to a user through a loudspeaker or the UI module to support initiating and managing bidirectional audio data flows.

Optionally, the network communication module 207 may also be configured to establish a second communicative connection between one or more controllable devices and the computing device 200, and the audio management module 203 may also, corresponding to a speech recognition result, generate control information for a controllable device, so as to send the control information to the controllable device via the second communicative connection, such that the controllable device performs a corresponding operation, and may receive data, etc., from the controllable device via the second communicative connection.

Similarly, these modules in the computing device 200 may be further divided into more sub-modules, or two modules may be merged into one module, and modules related to other functions may also be included, which is not limited in the present application. Each module may be implemented by hardware circuits, computer programs or instructions running on one or more processors 210, or a combination thereof.

The following describes the interaction process between the loudspeaker and the computing device shown in FIG. 3B in conjunction with two specific application scenarios.

### Scenario one: Family member calling and response system

Scenario description: At home, when children need to locate their Dad or Mom, they may directly call out "Dad" or "Mom" to surrounding loudspeakers (which have established communicative connection with computing devices associated with the father or mother by default) without physically searching for them.

### Required modules:

- The audio capture module 310 of the loudspeaker 300: which continuously captures audio data in the ambient environment.
- The audio management module 330 of the loudspeaker 300: which receives the activation instruction from the computing device to activate the loudspeaker 300, and optimizes the quality of audio data by means of noise reduction, echo cancellation, and so on.
- The bidirectional audio communication module 340 of the loudspeaker 300: which facilitates real-time transmission of sound.
- Respective network communication modules of the loudspeaker 300 and the computing device: which are configured to provide network communication connection.
- The speech recognition module 205 of the computing device: which recognizes the target sound and/or determines the identification of the loudspeaker emitting the target sound.
- The interaction module 206 of the computing device: which presents or sends prompt information to notify parents that their children are looking for them.

### Scenario two: Home notification via loudspeaker system

Scenario description: A father or mother may send voice notifications to all family members at home via a computing device, regardless of their locations.

### Required modules:

- The interaction module 206 of the computing device: the father or mother initiates a voice or text input request via this interaction module 206. Optionally, when sending a voice input request, the audio capture module 201 of the computing device is also required to be invoked. When sending a text input request, the audio output module 320 of the loudspeaker is also required to be invoked to perform text-to-speech data conversion processing.
- Respective network communication modules of the loudspeaker 300 and the computing device: which provide network communication connection to ensure that voice data is accurately delivered to every loudspeaker at home.
- The audio output module 320 of the loudspeaker 300: which plays voice data from the father or mother or converts text data into voice data for playback.

Thus, through respective modules in the loudspeaker 300 and the computing device 200, the interactivity and the utility between the loudspeaker and the computing device (e.g., mobile application) are significantly enhanced, user experience is enriched via efficient data exchange and intelligent processing, thereby ensuring timely transmission and management of audio and voice data.

Additionally, it should be noted that although FIG. 3B only illustrates a scenario where one loudspeaker is in communicative connection with and interacts with one computing device, it should be understood that a plurality of loudspeakers may be in communicative connection with a computing device for interaction, and/or one loudspeaker may be in communicative connection with a plurality of computing devices for interaction, as shown in the audio systems of FIGS. 4A-4B.

For example, an audio system 400 as shown in FIG. 4A may include a first computing device 410, a second computing device 420, and a group of loudspeakers, where the group of loudspeakers are in communicative connection with both the first computing device 410 and the second computing device 420. As an example, the first computing device 410 is associated with the father, the second computing device 420 is associated with the mother, and both the first computing device 410 and the second computing device are in communicative connection with loudspeakers in bedrooms where all children are located (the two groups of loudspeakers completely overlapping).

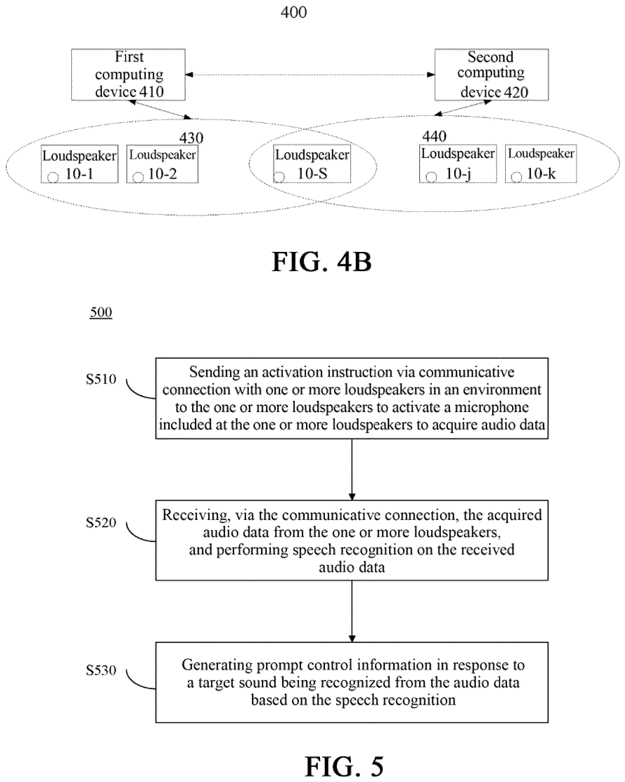

As another example, an audio system 400 as shown in FIG. 4B may include a first computing device 410, a second computing device 420, a first group of loudspeakers 430 (10-1, 10-2, ..., 10-S), and a second group of loudspeakers 440 (10-j, 10-k, ..., 10-S). The first computing device 410 may be configured to communicatively connect with the first group of loudspeakers 430 in the environment, and the second computing device 420 may be configured to communicatively connect with the second group of loudspeakers 430 in the environment, where the first group of loudspeakers 430 and the second group of loudspeakers 440 may be completely different or partially the same (e.g., loudspeaker 10-S).

Each of the first computing device 410 and the second computing device 420 may be a computing device as previously described with reference to FIGS. 1-3. For example, each computing device 410 or 420 may include: at least one communication component configured to perform communicative connection with a corresponding group of loudspeakers; at least one processor; and at least one memory configured to store computer programs or instructions that, when executed by the at least one processor cause the at least one processor to: send, via the communicative connection, activation instructions to a corresponding group of loudspeakers in the first group of loudspeakers and the second group of loudspeakers to activate microphones equipped at the corresponding group of loudspeakers to capture audio data; receive, via the communicative connection, the captured audio data from the corresponding group of loudspeakers, and perform speech recognition on the received audio data; and generate prompt control information in response to a target sound being recognized from the received audio data based on the speech recognition.

Optionally, when a specific loudspeaker 10-S is concurrently included in both the first group of loudspeakers 430 and the second group of loudspeakers 440, both the first computing device 410 and the second computing device 420 receive the captured audio data from the specific loudspeaker via corresponding communicative connection.

Additionally, as described previously, the target sound may be a linguistic sound including a keyword; therefore, when performing speech recognition on the received audio data, a processor of each of the first computing device 410 and the second computing device 420 may execute computer programs or instructions to: perform speech recognition on the received audio data to recognize whether the audio data includes a keyword included in the target sound, and in a case where the audio data includes the keyword, determine that the audio data includes the target sound.

Optionally, the same or different keywords may be set for the first computing device 410 and the second computing device 420. As an example, when the first computing device 410 is associated with the father and the second computing device 420 is associated with the mother, a keyword at the first computing device 410 may be set to "Dad" and a keyword at the second computing device 420 may be set to "Mom"; alternatively, keywords at both computing devices may be set to both "Dad" and "Mom".

Alternatively, when the target sound is a non-linguistic sound, similarly, the same or different target language databases or different sound models may be set for the first computing device 410 and the second computing device 420.

Optionally, the first computing device 410 and the second computing device 420 may also communicate with each other, thereby enabling mutual transferring of audio data, control information, or the like.

Therefore, such expansion capability as shown in FIG. 4 broadens the scope of communication and interaction, making the system composed of loudspeakers and computing devices highly suitable for various scenarios.

According to another aspect of the present application, an audio management method is further provided.

FIG. 5 illustrates a schematic flowchart of an audio management method according to embodiments of the present application. The method may be performed by the computing device 200 (e.g., a processor thereof) as described with reference to FIG. 2.

As shown in FIG. 5, a method 500 may include steps S510 - S530.

In step S510, an activation instruction is sent via communicative connection with one or more loudspeakers in an environment to the one or more loudspeakers to activate a microphone included at the one or more loudspeakers to capture audio data.

In step S520, the captured audio data is received, via the communicative connection, from the one or more loudspeakers, and speech recognition is performed on the received audio data.

For example, the target sound is a linguistic sound including a keyword or is a non-linguistic sound. During speech recognition, the speech recognition may be performed on the received audio data to recognize whether the audio data includes the keyword; and in a case where the audio data includes the keyword, it is determined that the audio data includes the target sound. Alternatively, during speech recognition, speech recognition may also be performed on the received audio data to recognize whether the audio data matches a target sound in a target sound database or matches a sound model in one or more sound models.

In step S530, prompt control information is generated in response to a target sound being recognized from the audio data based on the speech recognition.

For example, in response to the target sound being recognized, control information for controlling a local loudspeaker included in the computing device to emit an alarm sound may be generated; control information for controlling the local loudspeaker included in the computing device to play the acquired audio data in real time may be generated; and/or display control information for controlling a display included in the computing device to display a display element related to a text prompt may be generated.

Optionally, bidirectional communication may also be implemented. For example, preset audio data or voice data captured by a local microphone of the computing device may be transferred via the communicative connection to at least a portion of the one or more loudspeakers currently in the communicative connection.

Optionally, a second communicative connection may also be established with a controllable device via the at least one communication component, so as to send, in response to the target sound being recognized based on the speech recognition, control information to the controllable device via the second communicative connection to cause the controllable device to perform a predetermined operation.

Optionally, command recognition in the audio data may also be performed. For example, based on performing speech recognition on the received audio data, it is determined that a user control command is recognized from the audio data received from a first loudspeaker; and based on the user control command, control information is sent to the first loudspeaker or a second loudspeaker associated with the user control command.

More implementation details of the various steps in this method can be referred to the descriptions earlier with reference to FIGS. 2 to 4B, and therefore are not repeated here.

With this audio management method, by utilizing a local area network constituted by a computing device and audio devices (e.g., loudspeakers), real-time data transmission between the audio devices and the computing device is implemented, such that deeper-level integration and communication between the audio devices and the computing device can be achieved utilizing respective hardware conditions possessed by the computing device and individual audio devices, so as to improve the utilization rate of the existing hardware resources. Furthermore, when the computing device recognizes a target sound (e.g., a child calling for Dad or Mom or crying, a smoke alarm sound, etc.) based on performing speech recognition on audio data received in real time from a loudspeaker, an alert is promptly issued to a user, such that the user can timely and rapidly respond and take appropriate measures to resolve possible emergency situations or problems in the environment. Since complex processing such as speech recognition is configured at the computing device having stronger processing capability, there is no high requirement for processing capability of the loudspeaker, enabling reasonable utilization of ordinary speakers including microphones. Additionally, one-to-one or one-to-many transmission of voice data from the computing device to loudspeakers can be achieved, thereby forming, together with the aforementioned reception of audio data by the computing device from loudspeakers, a bidirectional pathway between the computing device and the loudspeakers, significantly enhancing the interactivity and practicality between the loudspeakers and the computing device.

According to another aspect of the present application, a computer-readable storage medium is further provided, which stores thereon computer programs or instructions that, when executed by a processor, cause the processor to perform the audio management method as described with reference to FIG. 5.

According to still another aspect of the present application, a computer program product is provided, which includes thereon computer programs or instructions that, when executed by a processor, cause the processor to perform the audio management method as described with reference to FIG. 5.

As an example, the processors of the present application may each include an integrated circuit chip with signal processing capabilities. The processor may be a general-purpose processor, a digital signal processor (DSP), an application-specific integrated circuit (ASIC), a field-programmable gate array (FPGA), or other programmable logic devices, discrete gates or transistor logic device, or discrete hardware components, so as to be configured to implement or execute the methods, steps, and logic block diagrams disclosed in the embodiments of the present disclosure. **In** addition, the processor may also include a memory or be combined with a memory. The memory and the computer-readable storage medium of the present application may include a non-volatile storage medium. The non-volatile storage medium stores a computer executable program, which, when executed, enables the processor to implement various operations as described above.

The nonvolatile memory may be a read-only memory (ROM), a programmable read-only memory (PROM), an erasable programmable read-only memory (EPROM), an electrically erasable programmable read-only memory (EEPROM), or a flash memory. It should be noted that memory of the methods described herein is intended to include, but is not limited to, these and any other suitable types of memory.

As used herein (including in the claims), "or" used in a list of items (e.g., a list of items followed by phrases such as "at least one of" or "one or more of") indicates an inclusive list so that, for example, a list of at least one of A, B, or C means A or B or C or AB or AC or BC or ABC (i.e., A and B and C). Similarly, as used herein, the phrase "based on" should not be interpreted as referencing a closed set of conditions. For example, an exemplary step described as "based on condition A" may be based on both condition A and condition B without departing from the scope of the present disclosure. In other words, as used herein, the phrase "based on" should be interpreted in the same manner as the phrase "based at least in part on".

In the drawings, similar components or features may have the same reference numerals. Additionally, individual components of the same type may be distinguished by appending a dash following the reference numeral and a second label differentiating between similar components. If only the first reference label is used in the specification, the description is applicable to any one of the similar components having the same first reference label regardless of the second reference label or other subsequent reference labels.

The detailed description provided herein with reference to the drawings describes example configurations but does not represent all examples that may be implemented or fall within the scope of the claims. As used herein, the term "exemplary" means "serving as an example, instance, or illustration," but does not imply "preferred" or "advantageous over other examples". The detailed description includes specific details for providing a thorough understanding of the described techniques. However, these techniques may be practiced without these specific details. In some instances, well-known structures and devices are shown in block diagram form in order to avoid obscuring the concepts of the examples being described.

The description provided herein enables those skilled in the art to implement or use the present disclosure. Various modifications to the present disclosure will be apparent to those of ordinary skill in the art, and the general principles defined herein may also be applied to other variations without departing from the scope of the present disclosure. Therefore, the present disclosure is not limited to the examples and designs described herein but should align with the broadest scope of the principles and novel features disclosed herein.

## Claims

1. An audio management method, which is performed by a computing device, comprising:
sending, via communicative connection with one or more audio devices in an environment, an activation instruction to the one or more audio devices to activate a microphone included at the one or more audio devices to capture audio data;
receiving, via the communicative connection, the captured audio data from the one or more audio devices, and performing speech recognition on the received audio data; and
generating prompt control information in response to a target sound being recognized from the audio data based on the speech recognition.

2. The audio management method according to claim 1, wherein the computing device further comprises a local microphone for capturing audio data of an ambient environment around the computing device; and
the method further comprises:
transferring, via the communicative connection, preset audio data or the audio data captured by the local microphone to at least a portion of the one or more audio devices in response to the target sound being recognized or as required.

3. The audio management method according to claim 1 or 2, wherein the target sound is a linguistic sound comprising a keyword, and
wherein performing the speech recognition on the received audio data comprises:
performing the speech recognition on the received audio data to recognize whether the audio data comprises the keyword; and
determining that the audio data comprises the target sound in a case where the audio data comprises the keyword.

4. The audio management method according to any preceding claim, wherein the target sound is a non-linguistic sound, and
wherein performing the speech recognition on the received audio data comprises:
performing the speech recognition on the received audio data to recognize whether the audio data matches a candidate target sound in the target sound database or matches a candidate sound model in a sound model set; and
determining that the audio data comprises the target sound in a case where the audio data matches the candidate target sound in the target sound database or matches the candidate sound model in the sound model set.

5. The audio management method according to any preceding claim, further comprising:
determining a plurality of audio devices based on device discovery;
displaying display elements regarding the plurality of audio devices on a display associated with the computing device; and
controlling, in response to a selection for the display elements regarding the one or more audio devices, performing the communicative connection with the one or more audio devices such that the activation instruction is sent from the computing device to the one or more audio devices.

6. The audio management method according to any preceding claim, wherein generating the prompt control information comprises:
generating control information for controlling a local audio device included in the computing device to emit an alarm sound;
generating control information for controlling the local audio device included in the computing device to play the received audio data in real time; and/or
generating display control information for controlling a display associated with the computing device to display a display element related to a textual prompt.

7. The audio management method according to any preceding claim, further comprising:
sending, in response to the target sound being recognized based on the speech recognition, control information to a controllable device via a second communicative connection with the controllable device to cause the controllable device to perform a predetermined operation.

8. The audio management method according to any preceding claim, wherein the controllable device comprises a video acquisition device in the environment, and
wherein the audio management method further comprises:
receiving, in response to sending the control information to the video acquisition device, acquired video data from the video acquisition device via the second communicative connection; and
controlling a display associated with the computing device to display the video data.

9. The audio management method according to any preceding claim, further comprising:
determining, based on performing the speech recognition on the received audio data, that a user control command is recognized from the audio data received from a first audio device; and
sending, based on the user control command, control information to the first audio device or a second audio device associated with the user control command.

10. A computing device, comprising:
at least one communication component configured to perform communicative connection with one or more audio devices in an environment,
at least one processor, and
at least one memory configured to store computer programs or instructions that, when executed by the at least one processor, cause the at least one processor to perform the method according to any one of claims 1-9.

11. An audio system, comprising:
a first computing device configured to perform communicative connection with a first group of audio devices in an environment, and
a second computing device configured to perform communicative connection with a second group of audio devices in the environment, wherein the first group of audio devices and the second group of audio devices are different or at least partially the same,
wherein each of the first computing device and the second computing device comprises:
at least one communication component configured to perform communicative connection with a corresponding group of audio devices,
at least one processor, and
at least one memory configured to store computer programs or instructions that, when executed by the at least one processor, cause the at least one processor to:
send, via corresponding communicative connection, an activation instruction to a corresponding group of audio devices in the first group of audio devices and the second group of audio devices to activate microphones included at the corresponding group of audio devices to capture audio data;
receive, via the corresponding communicative connection, the captured audio data from the corresponding group of audio devices, and perform speech recognition on the received audio data; and
generate prompt control information in response to a target sound being recognized from the audio data based on the speech recognition.

12. The audio system according to claim 11, wherein in a case where a specific audio device is concurrently included in both the first group of audio devices and the second group of audio devices, the first computing device and the second computing device receive the captured audio data from the specific audio device via corresponding communicative connection.

13. The audio system according to claim 11 or 12, wherein the target sound is a linguistic sound comprising a keyword,
wherein, to perform the speech recognition on the received audio data, the at least one processor of each of the first computing device and the second computing device executes the computer programs or instructions to:
perform the speech recognition on the received audio data to recognize whether the audio data comprises the keyword,
wherein keywords on which the speech recognition is based at the first computing device and the second computing device are the same or different.

14. A computer-readable storage medium having stored thereon computer programs or instructions that, when executed by a processor, cause the processor to perform the audio management method according to any one of claims 1-9.

15. A computer program product having stored thereon computer programs or instructions that, when executed by a processor, causes the processor to perform the audio management method according to any one of claims 1-9.
